# EUROPÄISCHE PATENTSCHRIFT

(11) **EP 4 082 824 B1**
(45) Veröffentlichungstag und Bekanntmachung des Hinweises auf die Patenterteilung: **04.03.2026**
(21) Anmeldenummer: 21171339.1
(22) Anmeldetag: 29.04.2021
(51) Int. Cl.: B60L 53/80, B60L 53/57, B60L 53/30

(54) **ANORDNUNG AUS EINEM ENERGIESPEICHER UND EINEM FAHRZEUGTRÄGER**
ARRANGEMENT COMPRISING AN ENERGY STORAGE DEVICE AND A VEHICLE CARRIER
AGENCEMENT COMPOSÉ D'UN ACCUMULATEUR D'ÉNERGIE ET D'UN SUPPORT DE VÉHICULE

(43) Veröffentlichungstag der Anmeldung: 02.11.2022
(73) Patentinhaber: Andreas Stihl AG & Co. KG, 71336 Waiblingen (DE)
(72) Erfinder: Heinrich, Thomas, 71397 Leutenbach (DE)
(74) Vertreter: Wasmuth, Rolf

(56) Entgegenhaltungen:
- WO-A1-2018/164362
- WO-A1-2019/224681
- CN-U- 202 283 868
- DE-A1- 102014 006 960

## Beschreibung

Die Erfindung betrifft eine Anordnung mit einem mobilen elektrischen Energiespeicher zur Energieversorgung von zumindest einem mobilen elektrischen Verbraucher. Der Energiespeicher weist ein Gehäuse auf, in dem eine Mehrzahl von wieder aufladbaren Einzelzellen aufgenommen ist. Die Einzelzellen sind elektrisch zu einem größeren Zellverbund verbunden, der auch aus mehreren, kleinere Module bildenden kleineren Zellverbunden zusammengesetzt sein kann. Der gesamte, elektrische geladene Zellverbund des Energiespeichers weist eine elektrische Systemleistung für ein Bordnetz auf. Das Gehäuse des Energiespeichers weist zumindest einen Anschluss zur Abgabe elektrischer Leistung in das Bordnetz auf und zumindest einen Anschluss zum Anlegen einer Außenspannung. Die Außenspannung ist zum elektrischen Aufladen des im Energiespeicher aufgenommenen Zellverbundes ausgelegt.

Elektrische Energiespeicher sind an sich bekannt, wobei das Gehäuse des mobilen Energiespeichers in einem Traggerüst gehalten ist, mit dem der Energiespeicher zu einem Einsatzort getragen werden kann. Um die Tragbarkeit des Energiespeichers zu gewährleisten, können keine der höheren Systemleistungen bereitgestellt werden, da eine höhere Systemleistung eine Vielzahl von Einzelzellen erfordert, die das Gesamtgewicht entsprechend erhöhen.

Der Einsatz von akkubetriebenen Arbeitsgeräten nimmt ständig zu. Während im privaten Bereich meist eine Akkuladung zur Ausführung von Arbeiten ausreichend ist, mindert die begrenzte Akkukapazität die Möglichkeiten des Einsatzes im gewerblichen Bereich. Im gewerblichen Bereich müssen für ein Arbeitsgerät mehrere geladene Akkupacks mitgeführt werden, um eine ausreichende Arbeitszeit zu gewährleisten. Auch wurde vorgeschlagen, einen Energiespeicher vor Ort mitzuführen, aus dem die Akkupacks der benutzten Arbeitsgeräte geladen werden können. Um die Mobilität derartiger Energiespeicher zum Laden von Akkupacks sicherzustellen, sind die zur Verfügung gestellten elektrischen Leistungen aufgrund des Gewichtes der im Energiespeicher verbauten Zellverbunde begrenzt.

Die DE 10 2014 006 960 A1 beschreibt ein selbstfahrendes Fahrzeug, welches eine fest verbaute Akkubank als zentralen Energiespeicher aufweist. Ist der Ladezustand der Akkubank auf ein Minimum gesunken, muss das Fahrzeug an einer Ladesäule geladen werden. Während dieser Zeit steht es für einen Einsatz nicht zur Verfügung.

Der Erfindung liegt die Aufgabe zugrunde, insbesondere für den gewerblichen Bereich einen Energiespeicher zum Laden der Akkupacks von Arbeitsgeräten zur Verfügung zu stellen, der einerseits eine ausreichend hohe Systemleistung hat, schnell einsatzbereit ist und einfach zum Einsatzort transportiert werden können.

Gelöst wird die Aufgabe durch eine erfindungsgemäße Kombination aus einem mobilen elektrischen Energiespeicher und einem Fahrzeugträger, der zur Montage an einem Fahrzeug ausgebildet ist. Der Begriff ,Fahrzeug' ist als Oberbegriff für jedes Gefährt zu verstehen, das dem Transport von Personen, Gütern und/oder Werkzeugen dient. Ein Fahrzeug ist z. B. ein mobiles Verkehrsmittel, das an Land, auf dem Wasser oder in der Luft bewegt werden kann. Es kann ein Fahrzeug ohne Eigenantrieb sein, z. B. ein Anhänger, ein manuell zu ziehender Wagen oder dgl. oder auch ein Fahrzeug mit einem eigenen Antrieb, z. B. ein Kraftfahrzeug, ein Kastenwagen, ein Pritschenwagen, ein Bus oder dgl.

Der Energiespeicher ist an dem Fahrzeugträger des Gefährts auswechselbar gehalten. Der Fahrzeugträger selbst hat einen Koppelanschluss zur elektrischen Verbindung mit den elektrischen Anschlüssen des Energiespeichers, wobei bei auf dem Fahrzeugträger montierten Energiespeicher die Anschlüsse des Energiespeichers mit dem Koppelanschluss des Fahrzeugträgers elektrisch kontaktierend ineinandergreifen. Zwischen dem Energiespeicher und dem Fahrzeugträger wirken Sicherungselemente, die geeignet sind, den Energiespeicher mechanisch fest mit dem Fahrzeugträger zu verbinden.

Das Sicherungselement kann als zumindest ein am Energiespeicher vorgesehenes gehäusefestes Befestigungselement ausgebildet sein oder aber als ein zumindest am Fahrzeugträger vorgesehenes trägerfestes Befestigungselement. Ist ein Befestigungselement am Gehäuse des Energiespeichers und ein Befestigungselement am Fahrzeugträger vorgesehen, ergibt sich eine auch hohen Belastungen widerstehende Kopplung des Energiespeichers auf dem Fahrzeugträger.

Der Fahrzeugträger ist fest an einem Fahrzeug verbaut, mit dem der Energiespeicher zum Einsatzort gefahren wird. Mit einem auf dem Fahrzeugträger montierten Energiespeicher wird ein Ladenetz gespeist, welches vorzugsweise ausschließlich zum Laden von Akkupacks von Arbeitsgeräten genutzt wird. Das Ladenetz weist darüber hinaus einen Netzanschluss für eine Außenspannung auf, die z. B. ein 230 V-Netz oder dgl. Netzspannung sein kann. Über den Netzanschluss kann das Ladenetz an die Außenspannung angeschlossen werden, so dass einerseits ein Laden des im Fahrzeug verbauten mobilen Energiespeichers ohne zusätzliche Kabel oder Schaltungen in einfacher Weise möglich ist und andererseits während dem Laden des Energiespeichers auch ein Betrieb der im Fahrzeug verbauten Ladegeräte zum gleichzeitigen Laden von Akkupacks gewährleistet ist.

Der Fahrzeugträger weist einen Boden auf, der an zumindest einer Bodenkante einen erhöhten Rand aufweist. Der erhöhte Rand bestimmt die Endstellung des auf dem Fahrzeugträger verschiebbar aufgesetzten Energiespeichers.

In vorteilhafter Weiterbildung der Erfindung sind zwischen dem Boden des Fahrzeugträgers und dem Gehäuse des Energiespeichers Führungselemente zum gerichteten Verschieben des Energiespeichers vorgesehen. Dadurch ist das Aufschieben des Energiespeichers auf den Koppelanschluss des Fahrzeugträgers einfach auszuführen.

Der Fahrzeugträger ist derart ausgebildet, dass ein auf dem Boden des Fahrzeugträgers aufgesetzte Energiespeicher parallel zum Boden in Richtung auf den erhöhten Rand in die Endstellung des Energiespeichers zu verschieben ist.

In der Endstellung des Energiespeichers auf dem Fahrzeugträger greifen die Anschlüsse des Energiespeichers mit dem Koppelanschluss des Fahrzeugträgers mechanisch fest ineinander. Durch das mechanische Ineinandergreifen ist der Energiespeicher quer zur Verschieberichtung auf dem Fahrzeugträger gesichert.

Die die Endstellung sichernden Sicherungselemente sind vorzugsweise mechanisch verriegelbar, insbesondere werkzeuglos verriegelbar. Damit ist eine einfache Bedienung ohne Werkzeug möglich.

Das Ladenetz ist ein insbesondere von einem DC/AC Wechselrichter des Energiespeichers gespeistes 230 V Netz. Dadurch können handelsübliche Netzteile zur Aufladung von Akkupacks verwendet werden. Aufwendige Anpassungen zur Verwendung in der Anordnung mit dem mobilen elektrischen Energiespeicher entfallen. Das Ladenetz weist vorzugsweise einen elektrischen Außenanschluss zur Verbindung mit der Außenspannung auf, die insbesondere eine 230V Außenspannung ist. Ohne aufwendige Umschaltmaßnahmen können die Ladegeräte am Ladenetz in Betrieb bleiben, unabhängig davon, ob der Energiespeicher das Ladenetz speist oder aber eine Außenspannung.

Bevorzugt sind die im Gehäuse des Energiespeichers verbauten Einzelzellen Lithium-Ionen-Zellen.

Weitere Merkmale der Erfindung ergeben sich aus den weiteren Ansprüchen, der Beschreibung und der Zeichnung, in der schematisch ein Ausführungsbeispiel der Erfindung dargestellt ist. Es zeigen:
- Fig. 1: in schematischer Darstellung ein Fahrzeug mit einer erfindungsgemäßen Anordnung aus Energiespeicher und Fahrzeugträger zum Laden von Akkupacks von Arbeitsgeräten,
- Fig. 2: in perspektivischer Darstellung eine schematische Ansicht eines Fahrzeugträgers und eines Energiespeichers,
- Fig. 3: eine Seitenansicht des Fahrzeugträgers und eines Energiespeichers nach Fig. 2,
- Fig. 4: in perspektivischer schematischer Darstellung das Absetzen des Energiespeichers auf dem Boden des Fahrzeugträgers zur trägerfesten Montage des Energiespeichers auf dem Fahrzeugträger,
- Fig. 5: eine Seitenansicht der Darstellung zum Absetzen des Energiespeichers auf dem Boden des Fahrzeugträgers nach Fig. 4,
- Fig. 6: in perspektivischer schematischer Darstellung das Aufschieben des Energiespeichers auf den Fahrzeugträger parallel zu dessen Boden,
- Fig. 7: eine Seitenansicht der Darstellung zum Aufschieben des Energiespeichers auf den Fahrzeugträger nach Fig. 6,
- Fig. 8: eine perspektivische, schematische Darstellung des auf dem Fahrzeugträger aufgeschobenen und mechanisch gesicherten Energiespeichers,
- Fig. 9: eine Seitenansicht der Darstellung des auf den Fahrzeugträger aufgeschobenen Energiespeichers nach Fig. 8.

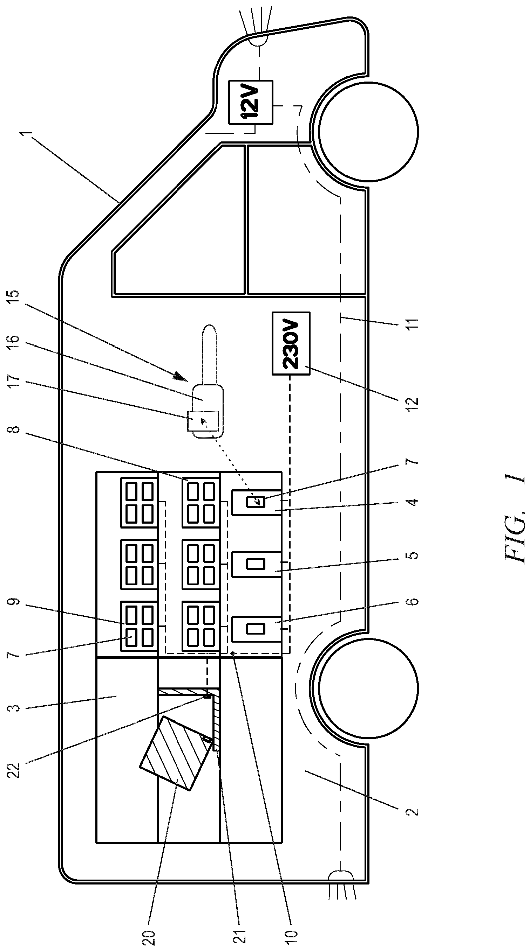

In Fig. 1 ist schematisch ein Fahrzeug 1 am Beispiel eines Kastenwagens gezeigt, auf dessen Ladefläche 2 beispielhaft ein Einbau in Form einer Regalanordnung 3 gezeigt ist. Das gezeigte Fahrzeug 1 ist ein Beispiel für ein Gefährt als mobiles Verkehrsmittel, das dem Transport von Personen, Gütern und/oder Werkzeugen dient.

In der gezeigten Regalanordnung 3 sind Ladegeräte 4, 5, 6 fest verbaut, die jeweils einen Akkuschacht 7 zur Aufnahme eines zu ladenden Akkupacks 17 von elektrischen Verbrauchern 15 aufweist, z. B. eines akkubetriebenen Arbeitsgerätes wie die in Fig. 1 schematisch dargestellte Motorkettensäge 16, eine Heckenschere, ein Blasgerät, ein Freischneider oder dgl. Arbeitsgerät. Entsprechend können auf anderen Regalebenen weitere Ladegeräte 8, 9 verbaut sein, die entsprechend angepasste Akkuschächte 7 zur Aufnahme von Akkupacks weiterer Verbraucher wie z. B. andere Arbeitsgeräte aufweisen.

Die Ladegeräte 4, 5, 6, 8 und 9 haben einen Netzanschluss, insbesondere einen 230 V-Netzanschluss und arbeiten voneinander unabhängig. Vorteilhaft sind die Ladegeräte 4, 5, 6, 8 und 9 Ladegeräte, die auch von einem Benutzer mobil an einem 230 V-Spannungsnetz eingesetzt werden können.

Die Ladegeräte 4, 5, 6, 8 und 9 werden im Fahrzeug 1 an einem Ladenetz 10 betrieben, welches insbesondere unabhängig vom Bordnetz 11 des Fahrzeugs 1 selbst ist. Das Ladenetz 10 ist insbesondere ein 230 V-Netz, entspricht somit der europaweit verwendeten Netzspannung im Haushalt.

Zum Betrieb der Ladegeräte 4, 5, 6, 8 und 9 ist vorteilhaft in der Karosserie des Fahrzeugs 1 ein Außenanschluss 12 vorgesehen, der mit dem Ladenetz 10 verbunden ist. Steht das Fahrzeug 1 nahe einem Netzanschluss, können die Ladegeräte 4, 5, 6, 8 und 9 auf der Ladefläche 2 des Fahrzeugs 1 mit Netzstrom geladen werden.

Um einen mobilen Einsatz der Ladegeräte 4, 5, 6, 8 und 9 zu gewährleisten, ist zumindest ein Energiespeicher 20 vorgesehen, der im Fahrzeug 1 an einem Fahrzeugträger 21 festzulegen ist. Der Fahrzeugträger 21 weist einen Koppelanschluss 22 auf, der vorzugsweise unmittelbar mit dem Ladenetz 10 elektrisch verbunden ist. Liegt an dem Außenanschluss 12 eine Netzspannung von z. B. 230 V an, so ist das gesamte Ladenetz 10 mit der Betriebsspannung des Außenanschlusses 12 beaufschlagt. Da der Koppelanschluss 22 am Ladenetz 10 elektrisch angeschlossen ist, liegt auch am Koppelanschluss 22 die Betriebsspannung des Außenanschlusses 12 an. Im gezeigten Ausführungsbeispiel ist dies eine Spannung von 230 V.

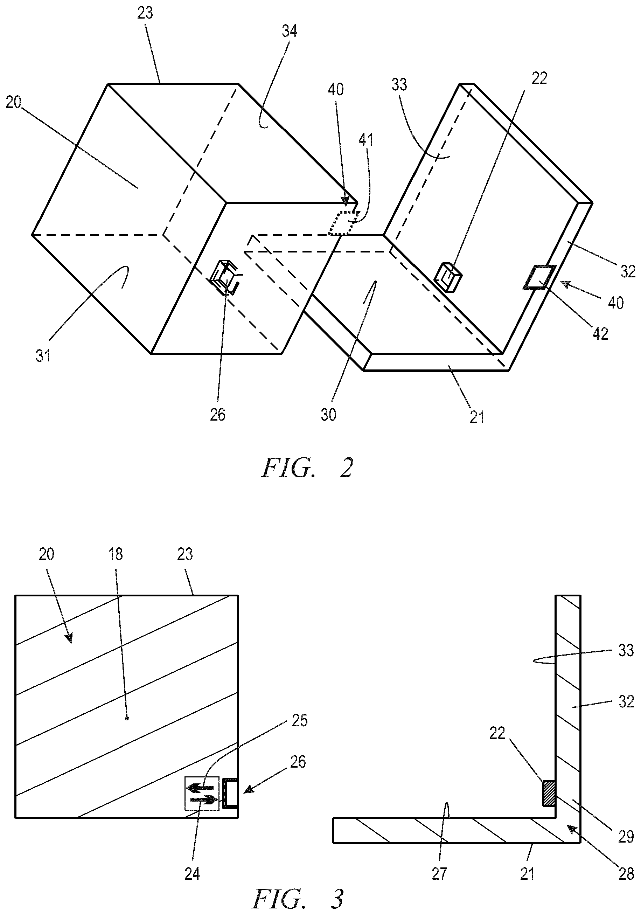

In den Figuren 2 und 3 ist der in Fig. 1 dargestellte Energiespeicher 20 zusammen mit dem ihm zugeordneten Fahrzeugträger 21 vergrößert dargestellt. Der Energiespeicher 20 weist ein Gehäuse 23 auf, in dem eine Mehrzahl von wiederaufladbaren Einzelzellen aufgenommen ist. Die wieder aufladbaren Einzelzellen können direkt zu einem Zellverbund 18 zusammengefasst sein, der im geladenen Zustand eine elektrische Systemleistung von 1 kWh und mehr, vorzugsweise 2 kWh, insbesondere 3,5 kWh oder höher, z. B. 15kWh aufweist.

Alternativ können die Einzelzellen zunächst in einem kleineren Verbund (von z. B. 6 Zellen) verbaut werden, um diese dann in größere Module zusammenzufassen, aus denen dann der Zellverbund 18 des Energiespeichers 20 gebildet wird. Die Einzelzellen können auch ohne Unterteilung in Untergruppen und Module direkt zu einem Gesamtverbund, nämlich dem Zellverbund 18 zusammengefasst werden. In einem Ausführungsbeispiel können bei einer Systemleistung von insbesondere etwa 2,05 kWh 144 Zellen in Modulen à 6 Zellen und in 4 Grids a 6 Modulen mechanisch zusammengefasst und elektrisch zusammengeschaltet werden. Auch andere Aufbauten in Modulen und Grids können zweckmäßig sein.

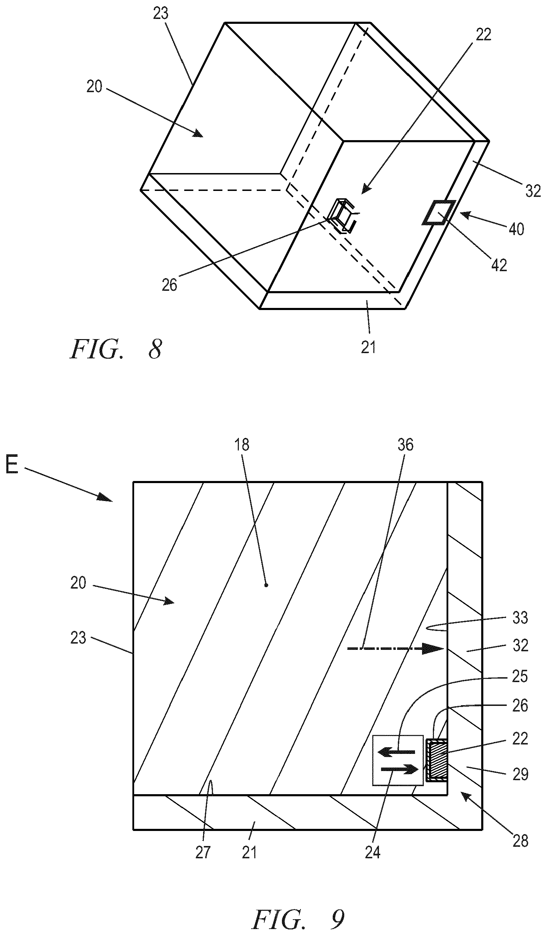

Der Energiespeicher 20 weist einen Anschluss 24 zur Abgabe elektrischer Leistung in das Ladenetz 10 auf, vorzugsweise über einen DC/AC Wechselrichter. Ferner weist der Energiespeicher 20 einen elektrischen Anschluss 25 zum Anlegen einer Außenspannung auf, z. B. die über den Außenanschluss 12 des Fahrzeugs 1 angelegte Betriebsspannung. Im gezeigten Ausführungsbeispiel des Energiespeichers 20 sind die Anschlüsse 24 und 25 zusammengefasst und bilden eine Steckbuchse 26, der der Koppelanschluss 22 des Fahrzeugträgers 21 zugeordnet ist. Der Fahrzeugträger 21 weist einen Boden 27 auf, wobei an einer Bodenkante 28 ein erhöhter Rand 29 ausgebildet ist. Wie Fig. 9 zeigt, bestimmt der erhöhte Rand 29 die Endstellung E des Energiespeichers 20 auf dem Fahrzeugträger 21. Der erhöhte Rand 29 dient der Halterung des Koppelanschluss 22 am Fahrzeugträger 21, der der Steckbuchse 26 zugeordnet ist.

Im gezeigten Ausführungsbeispiel ist der Fahrzeugträger 21 in Seitenansicht L-förmig, wobei der Boden 27 eine Fläche 30 aufweist, die der Bodenfläche 31 des Gehäuses 23 entspricht. Der zur Stirnwand 32 vergrößert ausgebildete erhöhte Rand 29 weist eine dem Energiespeicher 20 zugewandte Stirnseite 33 auf, die der Fläche der Stirnseite 34 des Energiespeichers 20 etwa entspricht.

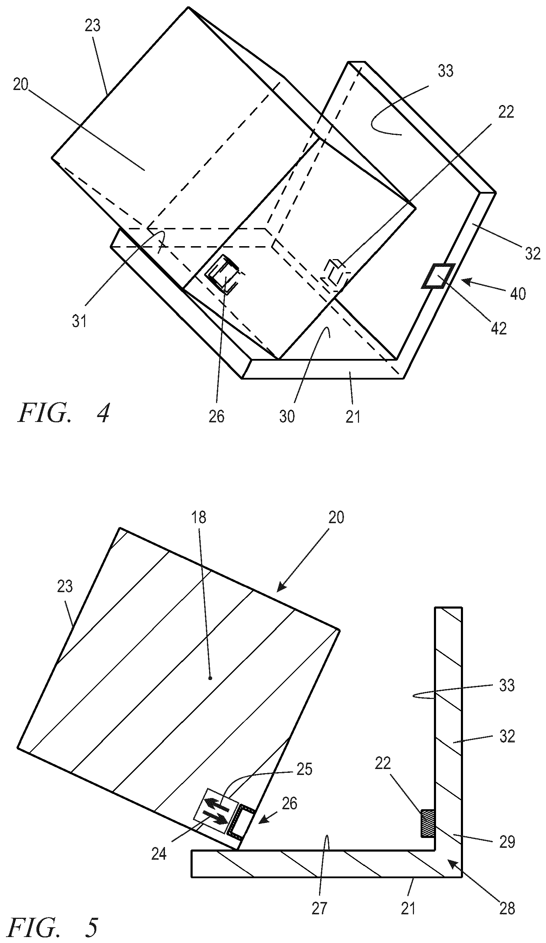

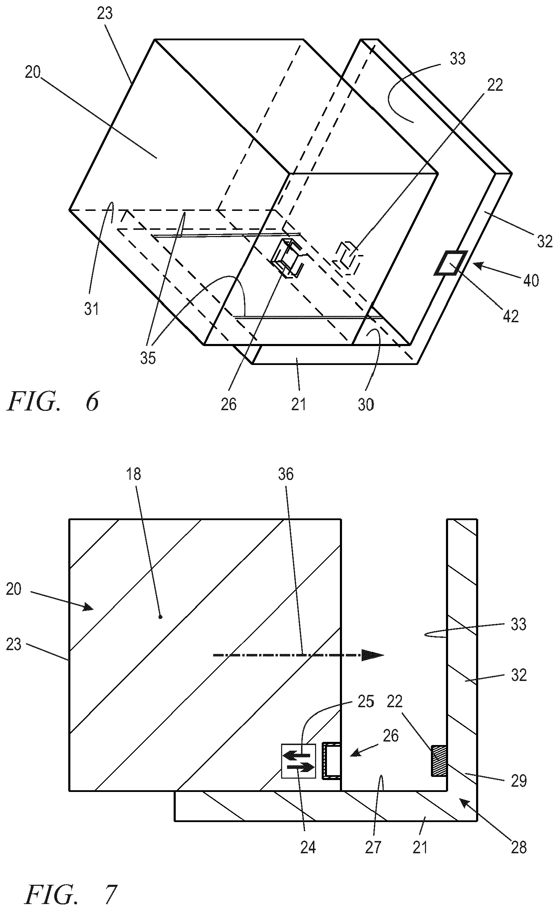

Zur Montage des Energiespeichers 20 auf dem Fahrzeugträger 21 wird der Energiespeicher 20 nach den Figuren 4 und 5 zunächst auf dem Boden 27 des Fahrzeugträgers 21 abgesetzt und dann, wie die Figuren 6 und 7 zeigen, auf dem Boden 27 abgestellt. Vorteilhaft sind zwischen dem Boden 27 des Fahrzeugträgers 21 und dem Gehäuse 23 des Energiespeichers 20 Führungselemente 35 angeordnet, wie sie in Fig. 6 schematisch dargestellt sind. Die Führungselemente 35 unterstützen die Verschiebung des Energiespeichers 20 in Pfeilrichtung 36 (Fig. 7) in Richtung auf den erhöhten Rand bzw. in Richtung auf die Stirnwand 32 des Fahrzeugträgers 21. Vorteilhaft unter Wirkung der Führungselemente 35 wird der Energiespeicher 20 auf dem Boden 27 des Fahrzeugträgers 21 parallel zum Boden 27 in Pfeilrichtung 36 in seine Endstellung E (Fig. 9) verschoben.

In der Endstellung E greift der Koppelanschluss 22 in die Steckbuchse 26 des Energiespeichers 20 ein, wobei der Koppelanschluss 22 eine elektrische Verbindung einerseits mit dem Anschluss 24 zur Abgabe elektrischer Leistung in das Ladenetz 10 und andererseits mit dem Anschluss 25 zum Anlegen einer Außenspannung herstellt. Der Energiespeicher 20 ist in seiner Endstellung E (Fig. 9) elektrisch mit dem Ladenetz 10 verbunden ist.

In der Endstellung E (Fig. 9) des Energiespeichers 20 auf dem Fahrzeugträger 21 greift der Koppelanschluss 22 mechanisch fest in die Steckbuchse 26 ein. Die Anschlüsse 24, 25 des Energiespeichers 20 sind mit dem Koppelanschluss 22 des Fahrzeugträgers 21 mechanisch fest verbunden.

Das Ladenetz 10 weist eine Betriebsspannung zum Betrieb der Ladegeräte 4, 5, 6, 8 und 9 auf, wobei diese Betriebsspannung einerseits über den Außenanschluss 12 des Fahrzeugs 1 bereitgestellt sein kann oder insbesondere am Einsatzort der elektrisch zu versorgenden Arbeitsgeräte andererseits über den Anschluss 24 des Energiespeichers 20 bereitgestellt ist. Bevorzugt entspricht die Betriebsspannung des Ladenetzes 10 der an dem Außenanschluss 12 angelegten Außenspannung, insbesondere einer Spannung von 230 V.

Der auf dem Fahrzeugträger 21 aufgesetzte und in seine Endstellung E verschobene Energiespeicher 20 wird vorteilhaft über Sicherungselemente 40 in seiner Endstellung E gesichert, die zwischen dem Energiespeicher 20 und dem Fahrzeugträger 21 wirken. Mittels der Sicherungselemente 40 wird der Energiespeicher 20 mechanisch fest mit dem Fahrzeugträger 21 verbunden. Da der Fahrzeugträger 21, wie in Fig. 1 dargestellt, fest mit dem Einbau des Fahrzeugs 1 verbunden ist, ist der Energiespeicher 20 im Fahrzeug 1 sachgerecht gesichert.

Das Sicherungselement 40 ist in den Figuren 2 bis 9 nur schematisch dargestellt. Das Sicherungselement 40 ist mechanisch verriegelbar, so dass ein unbeabsichtigtes Lösen der Sicherung verhindert ist. Das Sicherungselement 40 ist insbesondere werkzeuglos verriegelbar.

Das Sicherungselement 40 kann als am Energiespeicher 20 vorgesehenes gehäusefestes Befestigungselement 41 vorgesehen sein. Alternativ oder zusätzlich kann das Sicherungselement 40 als am Fahrzeugträger 21 vorgesehenes, trägerfestes Befestigungselement 42 ausgebildet sein. Werkzeuglos zu betätigende Befestigungselemente sind bevorzugt vorgesehen.

## Patentansprüche

1. Anordnung mit einem mobilen elektrischen Energiespeicher (20) zur Energieversorgung von zumindest einem mobilen elektrischen Verbraucher (15),
(a) wobei der Energiespeicher (20) ein Gehäuse (23) aufweist, in dem eine Mehrzahl von wiederaufladbaren Einzelzellen aufgenommen sind, die elektrisch einen Zellverbund (18) bilden,
(b) und der geladene elektrische Zellverbund (18) eine elektrische Systemleistung aufweist,
(c) und das Gehäuse (23) des Energiespeichers (20) zumindest einen Anschluss (24) zur Abgabe elektrischer Leistung in ein Ladenetz (10) und zumindest einen Anschluss (25) zum Anlegen einer Außenspannung aufweist,
(d) wobei die Außenspannung zum elektrischen Aufladen des im Energiespeicher (20) aufgenommenen Zellverbunds (18) anzulegen ist,
(e) und die Anordnung einen Fahrzeugträger (21) umfasst, der zur Montage an einem Fahrzeug (1) ausgebildet ist,
(f) dass der Energiespeicher (20) an dem Fahrzeugträger (21) auswechselbar gehalten ist,
(g) wobei der Fahrzeugträger (21) einen Koppelanschluss (22) zur elektrischen Verbindung des Ladenetzes (10) mit den elektrischen Anschlüssen (24, 25) des Energiespeichers (20) aufweist,
(h) wobei bei auf dem Fahrzeugträger (21) gehaltenen Energiespeicher (20) die Anschlüsse (24, 25) des Energiespeichers (20) mit dem Koppelanschluss (22) des Fahrzeugträgers (21) elektrisch kontaktierend ineinandergreifen, **dadurch gekennzeichnet**,
(i) der Fahrzeugträger (21) einen Boden (27) mit zumindest einem erhöhten Rand (29) aufweist, und der Rand (29) die Endstellung (E) des auf dem Fahrzeugträger (21) verschiebbar gehaltenen Energiespeichers (20) bestimmt, wobei der Fahrzeugträger (21) derart ausgebildet ist, dass der auf den Boden (27) des Fahrzeugträgers (21) aufgesetzte Energiespeicher (20) parallel zum Boden (27) in Richtung (36) auf den Rand (29) in seine Endstellung (E) zu verschieben ist,
(j) und zwischen dem Energiespeicher (20) und dem Fahrzeugträger (21) zumindest ein Sicherungselement (40) wirkt, das geeignet ist, den Energiespeicher (20) mechanisch fest mit dem Fahrzeugträger (21) zu verbinden,
(k) wobei das Sicherungselement (40) als zumindest ein am Energiespeicher (20) vorgesehenes gehäusefestes Befestigungselement (41) und/oder als ein zumindest am Fahrzeugträger (21) vorgesehenes trägerfestes Befestigungselement (42) ausgebildet ist.

2. Anordnung nach Anspruch 1,
**dadurch gekennzeichnet, dass** der Boden (27) Führungselemente (35) zum gerichteten Verschieben des Energiespeichers (20) aufweist.

3. Anordnung nach Anspruch 1 oder 2,
**dadurch gekennzeichnet, dass** in der Endstellung (E) des Energiespeichers (20) auf dem Fahrzeugträger (21) die Anschlüsse (24, 25) des Energiespeichers (20) mit dem Koppelanschluss (22) des Fahrzeugträgers (21) mechanisch fest ineinandergreifen.

4. Anordnung nach einem der Ansprüche 1 bis 3,
**dadurch gekennzeichnet, dass** das Sicherungselement (40) mechanisch, insbesondere werkzeuglos verriegelbar ist.

5. Anordnung nach einem der Ansprüche 1 bis 4,
**dadurch gekennzeichnet, dass** das Ladenetz (10) ein insbesondere von einem DC/AC Wechselrichter des Energiespeichers (20) gespeistes 230 V-Netz ist.

6. Anordnung nach einem der Ansprüche 1 bis 5,
**dadurch gekennzeichnet, dass** das Ladenetz (10) einen elektrischen Außenanschluss (12) zur Verbindung mit der Außenspannung aufweist.

7. Anordnung nach einem der Ansprüche 1 bis 6,
**dadurch gekennzeichnet, dass** der Fahrzeugträger (21) Teil der Ladefläche (2) eines Fahrzeugs (1), insbesondere eines Kraftfahrzeugs ist.

8. Anordnung nach einem der Ansprüche 1 bis 7,
**dadurch gekennzeichnet, dass** der Zellverbund (18) aus Lithium-Ionen-Zellen gebildet ist.

9. Anordnung nach einem der Ansprüche 1 bis 8,
**dadurch gekennzeichnet, dass** der geladene elektrische Zellverbund (18) des Energiespeichers (20) eine elektrische Systemleistung von mehr als 1,5 kWh bis zu 15 kWh aufweist.

## Claims

1. Arrangement having a mobile electrical energy storage unit (20) for supplying energy to at least one mobile electrical load (15),
(a) wherein the energy storage unit (20) has a housing (23) in which a plurality of rechargeable individual cells, which electrically form a cell assembly (18), are accommodated,
(b) and the charged electrical cell assembly (18) has an electrical system power,
(c) and the housing (23) of the energy storage unit (20) has at least one connection (24) for delivering electrical power into a charging network (10) and at least one connection (25) for applying an external voltage,
(d) wherein the external voltage is to be applied to electrically charge the cell assembly (18) accommodated in the energy storage unit (20),
(e) and the arrangement comprises a vehicle support (21) that is designed to be mounted on a vehicle (1),
(f) wherein the energy storage unit (20) is held on the vehicle support (21) in an exchangeable manner,
(g) wherein the vehicle support (21) has a coupling connection (22) for electrically connecting the charging network (10) to the electrical connections (24, 25) of the energy storage unit (20),
(h) wherein, when the energy storage unit (20) is held on the vehicle support (21), the connections (24, 25) of the energy storage unit (20) and the coupling connection (22) of the vehicle support (21) engage in one another so as to make electrical contact,
**characterized in that**
(i) the vehicle support (21) has a base (27) with at least one raised edge (29), and the edge (29) determines the end position (E) of the energy storage unit (20) that is held on the vehicle support (21) in a displaceable manner, wherein the vehicle support (21) is designed in such a way that the energy storage unit (20) placed on the base (27) of the vehicle support (21) is to be displaced parallel to the base (27) in the direction (36) of the edge (29) into its end position (E),
(j) and at least one securing element (40), which is suitable for connecting the energy storage unit (20) to the vehicle support (21) in a mechanically fixed manner, acts between the energy storage unit (20) and the vehicle support (21),
(k) wherein the securing element (40) is in the form of at least one fastening element (41) that is provided on the energy storage unit (20) and is fixed to the housing and/or of a fastening element (42) that is provided at least on the vehicle support (21) and is fixed to the support.

2. Arrangement according to claim 1,
**characterized in that** the base (27) has guide elements (35) for the directed displacement of the energy storage unit (20).

3. Arrangement according to claim 1 or 2,
**characterized in that**, in the end position (E) of the energy storage unit (20) on the vehicle support (21), the connections (24, 25) of the energy storage unit (20) and the coupling connection (22) of the vehicle support (21) engage in one another in a mechanically fixed manner.

4. Arrangement according to one of claims 1 to 3,
**characterized in that** the securing element (40) is able to be mechanically locked, in particular without tools.

5. Arrangement according to one of claims 1 to 4,
**characterized in that** the charging network (10) is a 230 V network, which is fed in particular by a DC/AC inverter of the energy storage unit (20).

6. Arrangement according to one of claims 1 to 5,
**characterized in that** the charging network (10) has an electrical external connection (12) for connecting to the external voltage.

7. Arrangement according to one of claims 1 to 6,
**characterized in that** the vehicle support (21) is part of the loading area (2) of a vehicle (1), in particular of a motor vehicle.

8. Arrangement according to one of claims 1 to 7,
**characterized in that** the cell assembly (18) is formed from lithium-ion cells.

9. Arrangement according to one of claims 1 to 8,
**characterized in that** the charged electrical cell assembly (18) of the energy storage unit (20) has an electrical system power of more than 1.5 kWh up to 15 kWh.

## Revendications

1. Agencement comprenant un accumulateur d'énergie électrique mobile (20) pour l'alimentation en énergie d'au moins un consommateur électrique mobile (15),
(a) l'accumulateur d'énergie (20) présentant un boîtier (23) dans lequel sont logés une pluralité d'éléments individuels rechargeables qui forment électriquement un ensemble d'éléments (18),
(b) et l'ensemble d'éléments électrique chargé (18) présente une puissance électrique de système,
(c) et le boîtier (23) de l'accumulateur d'énergie (20) présente au moins un raccord (24) pour la fourniture de puissance électrique dans un réseau de charge (10) et au moins un raccord (25) pour l'application d'une tension externe,
(d) la tension externe devant être appliquée pour charger électriquement l'ensemble d'éléments (18) logé dans l'accumulateur d'énergie (20),
(e) et l'agencement comprend un support de véhicule (21) conçu pour être monté sur un véhicule (1),
(f) l'accumulateur d'énergie (20) étant maintenu de manière interchangeable sur le support de véhicule (21),
(g) le support de véhicule (21) présentant un raccord de couplage (22) destiné à la liaison électrique du réseau de charge (10) avec les raccords électriques (24, 25) de l'accumulateur d'énergie (20),
(h) dans lequel, lorsque l'accumulateur d'énergie (20) est maintenu sur le support de véhicule (21), les raccords (24, 25) de l'accumulateur d'énergie (20) viennent en prise par contact électrique avec le raccord de couplage (22) du support de véhicule (21),
**caractérisé en ce que**
(i) le support de véhicule (21) présente un fond (27) doté d'au moins un bord (29) surélevé, et le bord (29) détermine la position finale (E) de l'accumulateur d'énergie (20) maintenu de manière coulissante sur le support de véhicule (21), le support de véhicule (21) étant conçu de telle sorte que l'accumulateur d'énergie (20) posé sur le fond (27) du support de véhicule (21) doit être amené à coulisser parallèlement au fond (27) en direction (36) du bord (29) vers sa position finale (E),
(j) et, entre l'accumulateur d'énergie (20) et le support de véhicule (21), agit au moins un élément de sécurisation (40) apte à relier l'accumulateur d'énergie (20) de manière mécaniquement fixe au support de véhicule (21),
(k) l'élément de sécurisation (40) étant réalisé sous la forme d'au moins un élément de fixation (41) solidaire du boîtier prévu sur l'accumulateur d'énergie (20) et/ou sous la forme d'au moins un élément de fixation (42) solidaire du support prévu sur le support de véhicule (21).

2. Agencement selon la revendication 1,
**caractérisé en ce que** le fond (27) présente des éléments de guidage (35) pour le coulissement guidé de l'accumulateur d'énergie (20).

3. Agencement selon la revendication 1 ou 2,
**caractérisé en ce que**, dans la position finale (E) de l'accumulateur d'énergie (20) sur le support de véhicule (21), les raccords (24, 25) de l'accumulateur d'énergie (20) viennent en prise mécaniquement de manière fixe avec le raccord de couplage (22) du support de véhicule (21).

4. Agencement selon l'une des revendications 1 à 3,
**caractérisé en ce que** l'élément de sécurisation (40) peut être verrouillé mécaniquement, en particulier sans outil.

5. Agencement selon l'une des revendications 1 à 4,
**caractérisé en ce que** le réseau de charge (10) est un réseau 230 V alimenté en particulier par un onduleur CC/CA de l'accumulateur d'énergie (20).

6. Agencement selon l'une des revendications 1 à 5,
**caractérisé en ce que** le réseau de charge (10) présente un raccord électrique externe (12) pour la liaison à la tension externe.

7. Agencement selon l'une des revendications 1 à 6,
**caractérisé en ce que** le support de véhicule (21) fait partie de la surface de chargement (2) d'un véhicule (1), en particulier d'un véhicule automobile.

8. Agencement selon l'une des revendications 1 à 7,
**caractérisé en ce que** l'ensemble d'éléments (18) est formé d'éléments au lithium-ion.

9. Agencement selon l'une des revendications 1 à 8,
**caractérisé en ce que** l'ensemble d'éléments électrique chargé (18) de l'accumulateur d'énergie (20) présente une puissance électrique de système supérieure à 1,5 kWh et allant jusqu'à 15 kWh.
